# EUROPEAN PATENT SPECIFICATION

(11) **EP 1 286 329 B1**
(45) Date of publication and mention of the grant of the patent: **29.03.2006**
(21) Application number: 01307175.8
(22) Date of filing: 23.08.2001
(51) Int. Cl.: G10L 15/04

(54) **Method and system for phonetic recognition**
Verfahren und Vorrichtung zur phonetischen Spracherkennung
Méthode et dispositif pour la reconnaissance phonétique

(43) Date of publication of application: 26.02.2003
(73) Proprietor: Culturecom Technology (Macau) Ltd., C.C., 6 & (J-L), Macau (CN)
(72) Inventor: Feng, Chia Chi, C.C., 6 & (J-L), Macau (CN)
(74) Representative: Jehan, Robert

(56) References cited:
- WO-A-01/52239
- CHAUG-CHING HUANG ET AL: "A Mandarin Speech Dictation System Based on Neural Network and Language Processing Model" DIGEST OF TECHNICAL PAPERS OF THE INTERNATIONAL CONFERENCE ON CONSUMERELECTRONICS (ICCE). ROSEMONT, JUNE 21 - 23, 1994, NEW YORK, IEEE, US,1994-06-21 , XP010218301
- CHENG Y H ET AL: "A simple tone classifier for Cantonese recognition" CHINA 1991 INTERNATIONAL CONFERENCE ON CIRCUITS AND SYSTEMS, JUNE 1991, SHENZHEN, CHINA, pages 18-21, XP010094051

## Description

The present invention relates to methods and systems for phonetic recognition, preferably in which principles of phonetic recognition and a general database of phonetic sounds and corresponding characters are employed so as to analyse a phonetic waveform for phonetic recognition without the pre-construction of a database of personal phonetic sounds and corresponding characters.

In general, conventional methods and systems for phonetic recognition are performed in a sampling manner in which a sound waveform corresponding to a phonetic packet of a user is sectionally sampled and characteristics such as frequency, amplitude waveform and carrier waveform of each sampled section of the phonetic packet are stored in a database in advance. This then allows the user to perform personal phonetic comparison and recognition. In other words, prior to using such a method and system for phonetic recognition, it is necessary to construct a personal database containing massive amounts of data of phonetic sounds and corresponding characters for the user, and thus phonetic recognition is a complex task.

A conventional method is disclosed in "A Mandarin Speech Dictation system based on Neural Network and Language Processing Model", CHAUG-CHING HUANG et al., Digest of Technical Papers of the Int. Conf. on Consumer Electronics (ICCE), Rosemont, June 21-23, 1994, new York.

More specifically, the conventional technology has the following drawbacks. In the case of performing the phonetic recognition by different users, a respective personal database needs to be built up for each of the users, due to differences in sound frequency, amplitude waveform and carrier waveform even for the same character in response to regional accents of the users. It also requires the build-up of a huge personal database, which increases difficulty in conducting the phonetic recognition. Furthermore, the conventional methods and systems for phonetic recognition can neither tell the difference in timbre between users nor recognise a user's emotional state. Moreover, as a personal database of phonetic sounds and corresponding characters needs to be established for each user prior to using the conventional method and system, phonetic recognition cannot be implemented by a user accessing the system for the first time, due to there being no personal database constructed for him/her.

The present invention seeks to provide improved phonetic recognition.

According to an aspect of the present invention, there is provided a method of phonetic recognition as specified in claim 1.

According to another aspect of the present invention, there is provided a system for phonetic recognition as specified in claim 5.

The preferred embodiment can provide a method and system for phonetic recognition which do not require a personal database of phonetic sounds and corresponding characters to be established for a user in advance. The phonetic recognition is implemented by using general principles of phonetic recognition and a general database of phonetic sounds and corresponding characters, and is applicable for users with different accents, so as to identify a character corresponding to a phonetic sound generated from the user, tell the difference in timbre between users and to recognise a user's emotional state. It does not require a personal database of phonetic sounds and corresponding characters for the user to be established in advance. Moreover, the system can also recognise a tone of the phonetic sound to be able to identify a Chinese character corresponding in variation of four tones to the phonetic sound:

In the preferred system a phonetic sound can be analysed in timbre characteristic for allowing a user's timbre to be recognised, while variations in volume of the phonetic sound can be analysed so as to tell the user's emotional condition. The preferred method for phonetic recognition comprises the steps of processing a phonetic sound generated by a user and transforming the phonetic sound into a phonetic waveform; analysing physical properties of the phonetic waveform for acquiring characteristic parameters of the waveform, and determining a fore frequency and a rear frequency of the sound packet; dividing a sound packet of the phonetic waveform into parts of consonant, wind and vowel, according to the characteristic parameters; analysing the parts of consonant and vowel for waveform characteristics thereof, so as to recognise a character consonant corresponding to the part of consonant and a character vowel corresponding to the part of vowel, and recognising a tone for the phonetic sound according to a rule for determining the fore and rear frequencies; combining the recognised parts of consonant and vowel and the recognised tone for determining a corresponding character for the phonetic sound; and compteting the phonetic recognition.

The preferred system comprises a phonetic recognition principle database, a database of phonetic sounds and corresponding characters, a phonetic transformation processing module and a phonetic recognition processing module. The phonetic recognition principle database includes principles of phonetic recognition to be used for processing a sound packet of a phonetic sound and dividing the sound packet into parts of consonant, wind and vowel, and determining a fore frequency and a rear frequency for the sound packet, so as to recognise the parts respectively, recognise a tone for the phonetic sound according to rules for determining the fore and rear frequencies, and combine the recognised parts of consonant and vowel or the recognised parts of consonant and vowel together with the recognised tone to be compared with a database of phonetic sounds and corresponding characters for obtaining a corresponding character for the phonetic sound.

The principles of phonetic recognition in the phonetic recognition principle database include a rule for dividing the sound packet into the parts of consonant, wind and vowel; a rule for determining the fore and rear frequencies; a rule for recognising the parts of consonant, wind and vowel; a rule for recognising the tone for the phonetic sound; a rule for combining the recognised parts of consonant and vowel; and a rule for combining the recognised parts of consonant and vowel and the recognised tone. Some or all of these rules may be used.

The database of phonetic sounds and corresponding characters has a phonetic sound therein consisting of a consonant and a vowel, or a consonant, a vowel and a tone, and a corresponding character for each phonetic sound.

The phonetic transformation processing module is used for transforming a user's phonetic sound into a corresponding physical waveform signal and inputting the waveform signal to a phonetic recognition processing module for phonetic recognition. The phonetic recognition processing module, according to the principles of phonetic recognition in the phonetic recognition principle database, processes the waveform signal by dividing a sound packet thereof into parts of consonant, wind and vowel, and determining a fore frequency and a rear frequency for the sound packet, so as to recognise the parts respectively, recognise a tone for the phonetic sound according to a rule for determining the fore and rear frequencies, and combine the recognised parts of consonant and vowel or the recognised parts of consonant and vowel together with the recognised tone to be compared with the database of phonetic sounds and corresponding characters for obtaining a corresponding character for the phonetic sound.

Embodiments of the present invention are described below, by way of example only, with reference to the accompanying drawings, in which:
Fig. 1 is a block diagram of a basic system architecture of the preferred method and system for phonetic recognition;
Fig. 2 is a schematic diagram showing the steps involved in performing the method for phonetic recognition in the use of the system for phonetic recognition of Fig. 1;
Fig. 3 is a schematic diagram showing the steps involved in performing the method for phonetic recognition so as to recognise a phonetic sound, timbre and emotional condition in the use of the system of Fig. 1;
Fig. 4 is a schematic diagram showing the detail steps involved in performing the method for phonetic recognition in the use of the system of Fig. 2;
Fig. 5 is a schematic diagram showing the detail steps involved in performing the method for phonetic recognition so as to recognise a phonetic sound, timbre and emotional condition in the use of the system of Fig. 3;
Fig. 6 is a schematic diagram showing the detail steps involved in recognising a Chinese character corresponding to a phonetic sound in the use of Fig. 4;
Fig. 7(a) is a schematic diagram showing composition of a phonetic waveform;
Fig. 7(b) is a schematic diagram showing parts of consonant, wind and vowel;
Fig. 7(c) is a schematic diagram showing a plosive waveform in the consonant part of Fig. 7(b);
Fig. 7(d) is a schematic diagram showing an affricate waveform in the consonant part of Fig. 7(b);
Fig. 8 is a schematic diagram showing composition of the vowel part in Fig. 7(b);
Fig. 9 is a schematic diagram showing characteristic parameters of the composition of the vowel part in Fig. 7(b);
Fig. 10 is a schematic diagram showing statistic frequencies for four tones of Chinese characters; and
Fig. 11 is a schematic diagram showing a waveform of consonant and vowel for a Chinese character 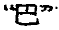 for phonetic recognition.

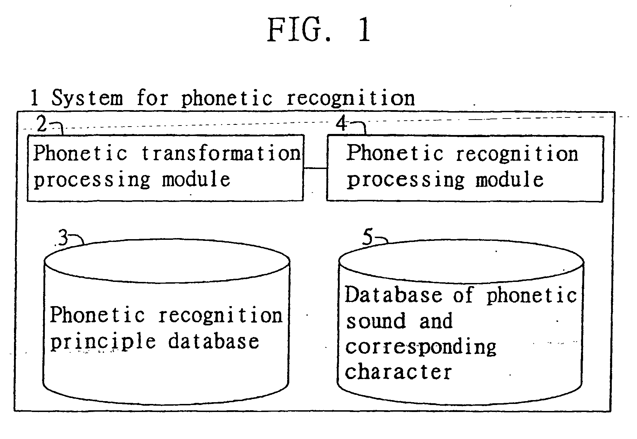

Fig. 1 illustrates the basic system architecture of the preferred method and system for phonetic recognition. As shown in the drawing, the system for phonetic recognition 1 includes a phonetic transformation processing module 2, a phonetic recognition principle database 3, a phonetic recognition processing module 4 and a general database of phonetic sounds and corresponding characters 5. The phonetic transformation processing module 2 can be an electronic device for transforming a phonetic sound into an electronic signal. The phonetic recognition processing module 4 is a computer mainframe. The phonetic recognition principle database 3 and the general database of phonetic sounds and corresponding characters 5 are stored in a memory device of the computer.

The phonetic recognition principle database 3 contains principles of phonetic recognition, which include a rule for dividing a sound packet of the phonetic sound into parts of consonant, wind and vowel; a rule for extracting fore and rear frequencies of the sound packet; a rule for identifying consonant, wind and vowel; a rule for recognising variation in four tones; a rule for combining consonant and vowel; a rule for combining consonant, vowel and four tones; a rule for recognising timbre of the sound packet; and a rule for recognising volume variation of the sound packet. The principles of phonetic recognition are used to divide the sound packet into the parts of consonant, wind and vowel for identification. The extracted fore and rear frequencies of the sound packet, together with frequencies of the vowel part and profile variation in waveform amplitude, are used to recognise the variation in four tones for a Chinese phonetic sound. Combinations of the identified parts of consonants and vowels, or combinations of consonants, vowels and four tone variations are compared with the database of phonetic sounds and corresponding characters 5, so as to obtain a character corresponding to the phonetic sound.

The general database of phonetic sounds and corresponding characters 5 contains a character database corresponding to phonetic sounds. A phonetic sound is a combination of a consonant and a vowel, or a combination of a consonant, a vowel and one of four tone variations. Each phonetic sound has its own corresponding word.

The phonetic transformation processing module 2 is used to transform a user's phonetic sound correspondingly into a physical waveform signal, and input the signal to the phonetic recognition processing module 4 for phonetic recognition.

According to the principles of phonetic recognition in the phonetic recognition principle database 3, the phonetic recognition processing module 4 processes the waveform signal by dividing it into the parts of consonant, wind and vowel, and extracting its fore and rear frequencies, so as to identify, process and combine the parts of consonant, wind and vowel. Combinations of the identified parts of consonants and vowels, or combinations of consonants, vowels and four tone variations are compared by the phonetic recognition processing module 4 with the database of phonetic sounds and corresponding characters 5, so as to obtain the corresponding character for the phonetic sound.

In order to identify the timbre of the user, the phonetic recognition processing module 4, according to the principles of phonetic recognition in the phonetic recognition principle database 3, analyses the sound packet for its carrier wave and edges of modulated saw wave on the carrier wave, so as to obtain the timbre characteristics and differentiate the timbre between users. In order to recognise the user's emotional condition, the phonetic recognition processing module 4 analyses the volume variation in the sound packet, which correlates with intonation and reflects the user's emotion, according to the principles of phonetic recognition in the phonetic recognition principle database 3.

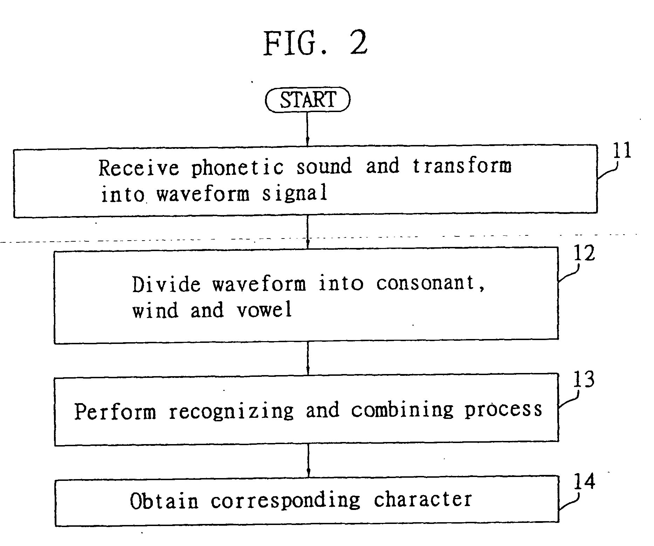

Fig. 2 illustrates the steps involved in performing the method for phonetic recognition in the use of the system for phonetic recognition of Fig. 1. As shown in the drawing, in step 11, the phonetic transformation processing module 2 receives a phonetic sound from a user and transforms it correspondingly into a physical waveform signal, which is input to the phonetic recognition processing module 4 for phonetic recognition. Then, step 12 is followed.

In step 12, according to principles of phonetic recognition in the phonetic recognition principle database 3, the phonetic recognition processing module 4 processes the input waveform signal from the phonetic transformation processing module 2 by dividing a sound packet of the input waveform signal into parts of consonant, wind and vowel, and extracting its fore frequencies and rear frequencies. Then, step 13 is followed.

In step 13, the phonetic recognition processing module 4 recognises, processes and combines the parts of consonant, wind and vowel, so as to combine the recognised parts of consonant and vowel, or the parts of consonant and vowel and four tone variations. Then, step 14 is followed.

In step 14, the phonetic recognition processing module 4 compares the combinations with the general database of phonetic sounds and corresponding characters 5 so as to obtain a corresponding character for the phonetic sound, and the phonetic recognition completes.

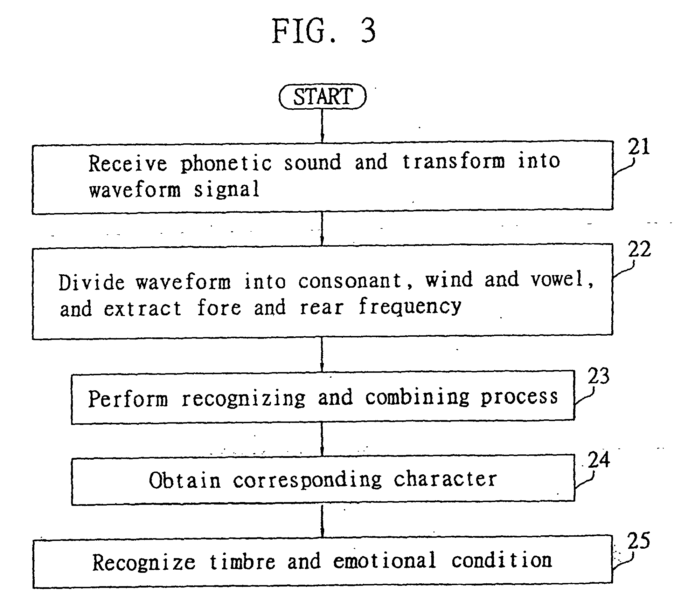

Fig. 3 illustrates the steps involved in performing the method for phonetic recognition so as to recognise a phonetic sound, timbre and emotional condition in the use of the system for phonetic recognition of Fig. 1. As shown, in step 21, the phonetic transformation processing module 2 receives a phonetic sound from a user and transforms it correspondingly into a physical waveform signal, which is input to the phonetic recognition processing module 4 for phonetic recognition. Then, step 22 is followed.

In step 22, according to principles of phonetic recognition in the phonetic recognition principle database 3, the phonetic recognition processing module 4 processes the input waveform signal from the phonetic transformation processing module 2 by dividing a sound packet of the input waveform signal into parts of consonant, wind and vowel, and extracting its fore frequencies and rear frequencies. Then, step 23 is followed.

In step 23, the phonetic recognition processing module 4 recognises, processes and combines the parts of consonant, wind and vowel, so as to combine the recognised parts of consonant and vowel, or the parts of consonant and vowel and four tone variations. Then, step 24 is followed.

In step 24, the phonetic recognition processing module 4 compares the combinations with the general database of phonetic sounds and corresponding characters 5 so as to obtain a corresponding character for the phonetic sound. Then step 25 is followed.

In step 25, for identifying the timbre of the user, the phonetic recognition processing module 4, according to the principles of phonetic recognition in the phonetic recognition principle database 3, analyses the sound packet for its carrier wave and edges of modulated saw wave on the carrier wave, go as to obtain the timbre characteristics and differentiate the timbre between users. For recognising the user's emotional condition, the phonetic recognition processing module 4 analyses volume variation in the sound packet, which correlates with intonation and reflects the user's emotion, according to the principles of phonetic recognition in the phonetic recognition principle database 3.

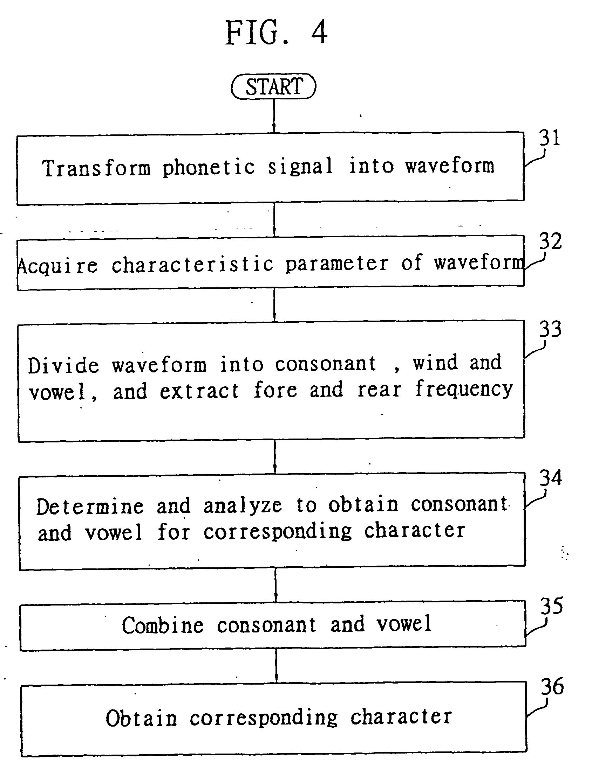

Fig. 4 illustrates the detailed steps involved in performing the method for phonetic recognition in the use of the system for phonetic recognition of Fig. 2. As shown, in step 31, the phonetic transformation processing module 2 receives a phonetic sound from a user and transforms it correspondingly into a physical waveform signal, which is input to the phonetic recognition processing module 4 for phonetic recognition. Then, step 32 is followed.

In step 32, according to principles of phonetic recognition in the phonetic recognition principle database 3, the phonetic recognition processing module 4 analyses physical characteristics of the waveform signal from the phonetic transformation processing module 2 so as to acquire various characteristic parameters thereof. Then, step 33 is followed.

In step 33, according to various characteristic parameters of the waveform signal, the phonetic recognition processing module 4 processes the waveform signal by dividing a sound packet of the input waveform signal into parts of consonant, wind and vowel, and extracting its fore frequencies and rear frequencies. Then, step 34 is followed.

In step 34, in the use of the principles of phonetic recognition, the phonetic recognition processing module 4 recognises and analyses the parts of consonant, wind and vowel according to waveform characteristics of the parts, so as to obtain a character consonant corresponding to the consonant part and a character vowel corresponding to the vowel part. Then, step 35 is followed.

In step 35, the phonetic recognition processing module 4 combines the character consonant and character vowel. Then, step 36 is followed.

In step 36, the phonetic recognition processing module 4 compares the combination of the character consonant and character vowel with the general database of phonetic sounds and corresponding characters 5 so as to obtain a corresponding character for the phonetic sound. Then, the phonetic recognition completes.

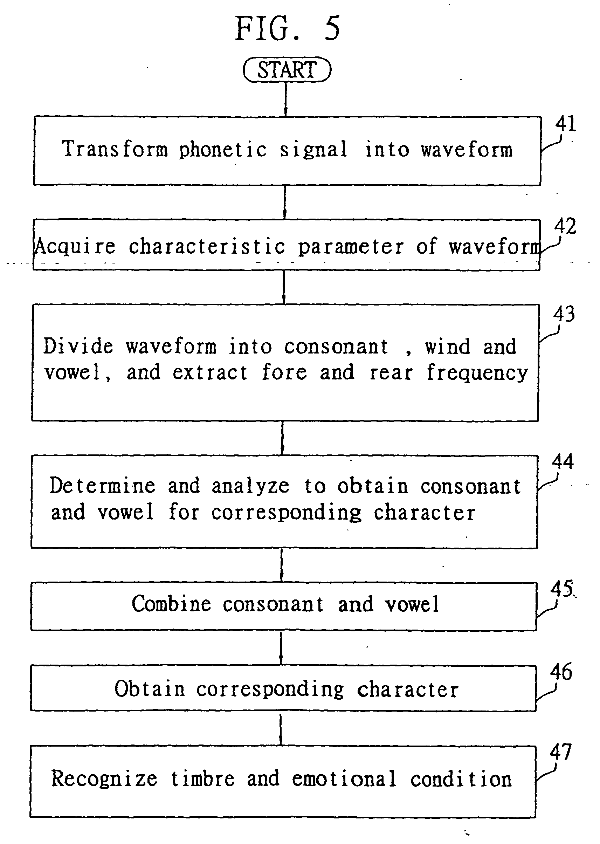

Fig. 5 illustrates the detailed steps involved in performing the method for phonetic recognition so as to recognise a phonetic sound, timbre and emotional condition in the use of the system for phonetic recognition of the invention in Fig. 3. As shown, in step 41, the phonetic transformation processing module 2 receives a phonetic sound from a user and transforms it correspondingly into a physical waveform signal, which is input to the phonetic recognition processing module 4 for phonetic recognition. Then, step 42 is followed.

In step 42, according to principles of phonetic recognition in the phonetic recognition principle database 3, the phonetic recognition processing module 4 analyses physical characteristics of the waveform signal from the phonetic transformation processing module 2 so as to acquire various characteristic parameters thereof. Then, step 43 is followed.

In step 43, according to various characteristic parameters of the waveform signal, the phonetic recognition processing module 4 processes the waveform signal by dividing a sound packet of the input waveform signal into parts of consonant, wind and vowel, and extracting its fore frequencies and rear frequencies. Then, step 44 is followed.

In step 44, in the use of the principles of phonetic recognition, the phonetic recognition processing module 4 recognises and analyses the parts of consonant, wind and vowel according to waveform characteristics of the parts, so as to obtain a character consonant corresponding to the consonant part and a character vowel corresponding to the vowel part. Then, step 45 is followed.

In step 45, the phonetic recognition processing module 4 combines the character consonant and character vowel. Then, step 46 is followed.

In step 46, the phonetic recognition processing module 4 compares the combination of the character consonant and character vowel with the general database of phonetic sounds and corresponding characters 5 so as to obtain a corresponding character for the phonetic sound. Then, step 47 is followed.

In step 47, for identifying the timbre of the user, the phonetic recognition processing module 4, according to the principles of phonetic recognition in the phonetic recognition principle database 3, analyses the sound packet for its carrier wave and edges of modulated saw wave on the carrier wave, so as to obtain the timbre characteristics and differentiate the timbre between users. For recognising the user's emotional condition, the phonetic recognition processing module 4 analyses volume variations in the sound packet, which correlates with intonation and reflects the user's emotion, according to the principles of phonetic recognition in the phonetic recognition principle database 3. Then, the phonetic recognition completes.

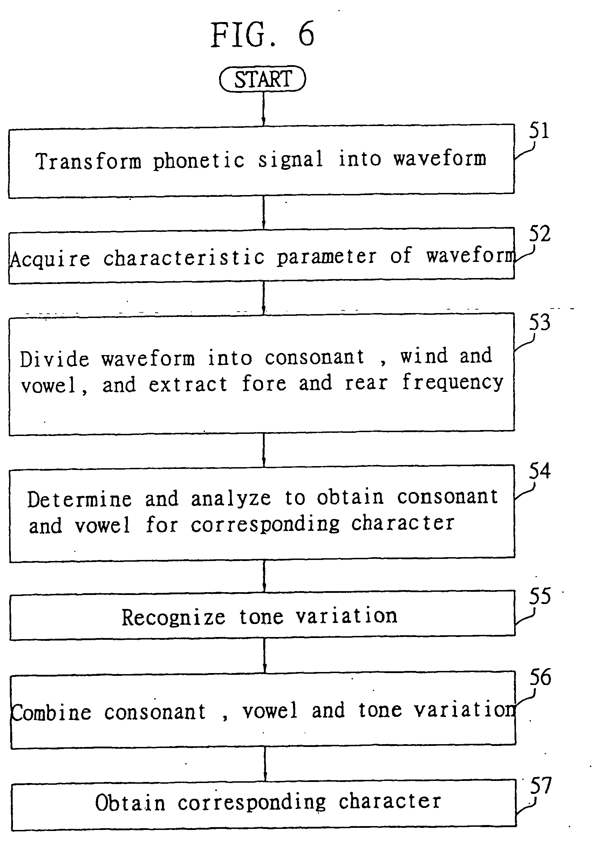

Fig. 6 illustrates the detail steps involved in recognising a Chinese character correspond to a phonetic sound in the use of the system for phonetic recognition of the invention in FIG. 4. As shown, in step 51, the phonetic transformation processing module 2 receives a phonetic sound from a user and transforms it correspondingly into a physical waveform signal, which is input to the phonetic recognition processing module 4 for phonetic recognition. Then, step 52 is followed.

In step 52, according to principles of phonetic recognition in the phonetic recognition principle database 3, the phonetic recognition processing module 4 analyses physical characteristics of the waveform signal from the phonetic transformation processing module 2 so as to acquire various characteristic parameters thereof. Then, step 53 is followed.

In step 53, according to various characteristic parameters of the waveform signal, the phonetic recognition processing module 4 processes the waveform signal by dividing a sound packet of the input waveform signal into parts of consonant, wind and vowel, and extracting its fore frequencies and rear frequencies. Then, step 54 is followed.

In step 54, in the use of the principles of phonetic recognition the phonetic recognition processing module 4 recognises and analyses the parts of consonant, wind and vowel according to waveform characteristics of the parts, so as to obtain a character consonant corresponding to the consonant part and a character vowel corresponding to the vowel part. Then, step 55 is followed.

In step 55, according to principles of phonetic recognition in the phonetic recognition principle database 3, the phonetic recognition processing module 4 extracts fore and rear frequencies of the sound packet. The extracted fore and rear frequencies, together with frequencies of the vowel part and profile variation in waveform amplitude, are used to recognise the variation in four tones for a Chinese phonetic sound. Then, step 56 is followed.

In step 56, the phonetic recognition processing module 4 combines the character consonant, the character vowel and the Chinese tone variation Then, step 57 is followed.

In step 57, the phonetic recognition processing module 4 compares the combination of the character consonant, character vowel and Chinese tone variation with the general database of phonetic sounds and corresponding characters 5 so as to obtain a corresponding character for the phonetic sound. Then, the phonetic recognition completes.

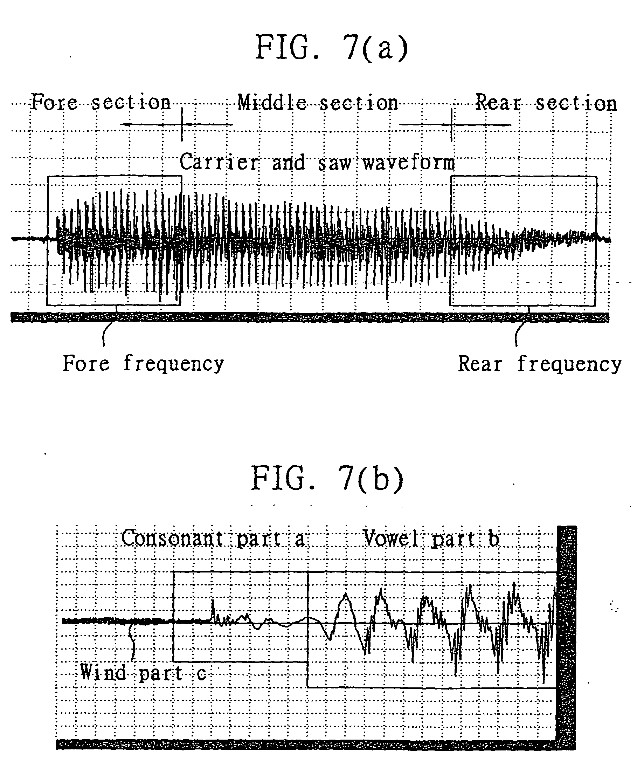

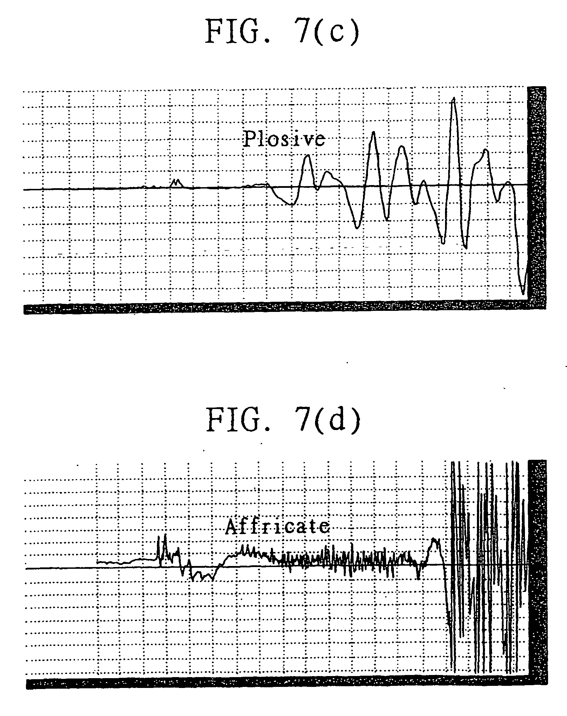

Fig. 7(a) illustrates composition of a phonetic waveform. As shown, a sound packet of the phonetic waveform can be separated into fore, middle and rear sections, wherein wind and consonant portions reside in the fore section and are followed by a vowel portion, while the wind portion is relatively much higher in frequency than the consonant and vowel portions. In the first quarter region of the sound packet of the phonetic waveform, a fore frequency can be obtained by randomly sampling a few sound packets and getting an average frequency thereof. Similarly, in the final quarter region of the sound packet of the phonetic waveform, a rear frequency is obtained by arbitrarily sampling a few sound packets and getting an average frequency thereof. Furthermore, in the drawing there are shown a carrier wave of the sound packet of the phonetic waveform and edges of a modulated saw wave on the carrier wave, as well as variation in amplitude volume for the sound packet of the phonetic waveform.

Fig. 7(b) illustrates parts of consonant, wind and vowel. As shown, a general phonetic waveform can be separated into parts of consonant a, wind b and vowel c.

In general, the consonant part a can be classified as a gradation sound, affricate, extrusion sound and plosive according to its waveform. The gradation sound is characterised as being purely composed of the consonant waveform with variation in sound volume, such as Chinese phonetic symbols, " 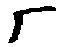 ", " 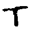 ", " 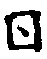 ", " 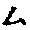 " (pronounced as "h", "x", "r", "s" respectively). The affricate is characterised as having the consonant waveform with a lingering sound followed by vowel waveform, such as Chinese phonetic symbols, " 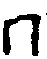 ", " 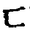 ", " 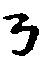 ", " 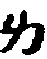 ", " 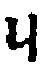 "(pronounced as "f", "n", "l", "j" respectively), as illustrated in Fig. 7(d). The extrusion sound is a plosive having a slower consonant waveform, such as Chinese phonetic symbols, " 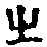 ", " 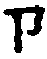 " (pronounced as "zh", "z" respectively). The plosive has its consonant waveform containing two or more magnified peaks, such as Chinese phonetic symbols, " 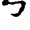 ", " 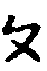 ", " 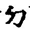 ", " 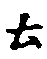 ", " 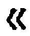 ", " 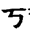 ", " 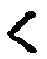 ", (pronounced as "b", "p", "d", "t", "g", "k", "q" respectively), as illustrated in Fig. 7(c). The wind part b is much higher in frequency than the consonants and vowels. The vowel part c is a waveform section located right after that for the consonant part.

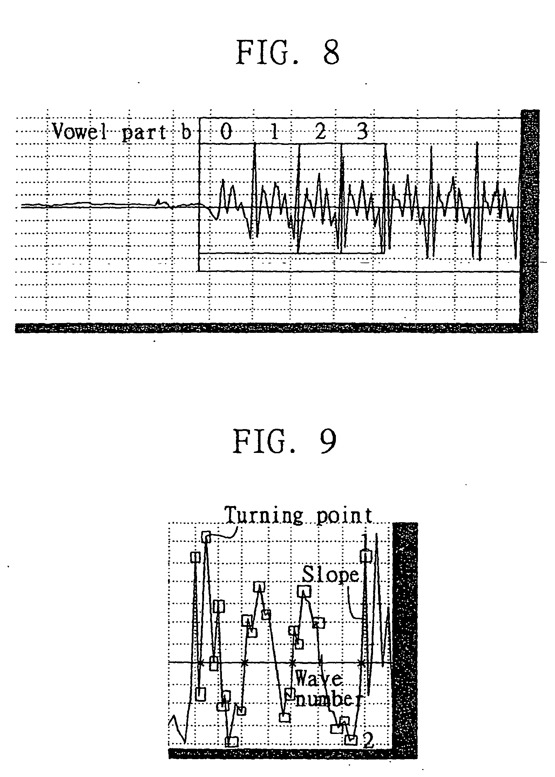

Fig. 8 illustrates composition of the vowel part in Fig. 7(b). As shown, repeated waveform areas in the vowel part c is called vowel packets. The vowel packet 0 is an initial divided sound packet at the beginning of the vowel part c, while the vowel packets 1-3 are divided sound packets showing repetition in vowels. In this case, following vowel packets (e.g. 4) can be observed in a similar way. Herein, the divided sound packets are generated by dividing the vowel waveform into independent vowel packets 0,1,2,3 etc.

Fig. 9 illustrates characteristic parameters of the composition of the vowel part in Fig. 7(b). As shown, according to vowel packets formed by dividing the vowel waveform, characteristic parameters, such as turning number, wave number and slope, can be obtained. The turning number is a count of turning points, each of which is located at a position within a tiny square in the drawing where the waveform changes the sign of slope. The wave number is a count of times for the waveform of the vowel packet passing through the X-axis from a lower domain to an upper domain. For example, in the drawing, the wave number is 4 illustrated by 4 points marked as x for showing the waveform passing through the X-axis. The slope can be obtained by measuring the slope or sampling numbers between squares 1 and 2. Subsequently, the above three characteristic parameters can be employed in vowel recognition according to some rules, wherein vowels for Chinese phonetic symbols include " 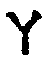 ", " 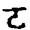 ", " 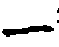 " " 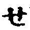 " and " 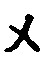 "' (pronounced as "a "o", "i", "e" and "u" respectively). For example, if wave number >= slope, the vowel is " 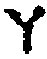 ", otherwise it is " 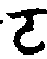 "; or if wave number >=6 and turning number < 10, the vowel is " 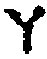 ", otherwise it is " 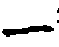 " . If turning number > wave number, the vowel is " 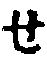 " or if wave number =3 and turning number <13, the vowel is " 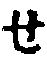 " otherwise it is " 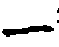 ". If turning number > wave number, the vowel is " 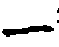 "; or if wave number =4 or 5 and turning number > three times of wave number, the vowel is " 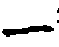 " . If wave number 3 and turning number <6, the vowel is " 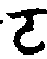 ". If wave number =2, the vowel is " 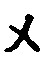 ", otherwise it is " 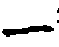 "; or if wave number =1 and turning number <7, the vowel is " 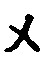 " otherwise it is " 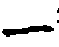 ",

For recognising variation in four Chinese phonetic tones, in the first quarter region of the sound packet of the phonetic waveform, a fore frequency can be obtained by randomly sampling a few sound packets and getting an average frequency thereof. Similarly, in the final quarter region of the sound packet of the phonetic waveform, a rear frequency is obtained by arbitrarily sampling a few sound packets and getting an average frequency thereof.

A term "point" in a phrase, "differ by points", means a number of sampled points and relates to frequency. For example, a sampling frequency of 11 kHz is equivalent to taking one sample point per 1/11000 second, in other words, 11K sampled points are taken in sampling time of 1 second. Likewise, a sampling frequency of 50 kHz is equivalent to taking one sampled point per 1/50000 second. In other words, 50K sampled points are taken in sampling time of 1 second. That is, in 1 second sampling time, the number of sampled points is identical to the value of frequency.

Once the fore and rear frequencies are obtained, the variation in four Chinese phonetic tones can be identified by the following rules:
1. if the fore and rear frequencies differ by 4 points, the phonetic tone is the first tone of the Chinese phonetic tones;
2. if the fore and rear frequencies differ by 5 points and the fore frequency is higher than the rear one, the phonetic tone is either the first tone or the second tone of the Chinese phonetic tones;
3. if the rear frequency is higher than the fore frequency and a difference in value between the fore and real frequencies is greater than half of the fore frequency, the phonetic tone is the fourth tone of the Chinese phonetic tones; and
4. the third and fourth tone can be determined by using the fore frequency and rear frequencies; if the fore frequency of a phonetic tone for female is smaller than 38 points, the phonetic tone is the fourth tone; if the fore frequency for female is greater than 60 points, the phonetic tone is the third tone; if the fore frequency of a phonetic tone for male is less than 80 points, the phonetic tone is the fourth tone; if the fore frequency is greater than 92 points, the phonetic tone is the third tone.

For identifying the timbre of a phonetic sound, according to principles of phonetic recognition, the sound packet of the phonetic sound is analysed for its carrier wave and edges of modulated saw wave on the carrier wave, so as to obtain the timbre characteristics and differentiate the timbre between users according to different carrier wave frequencies and amplitude variations for the phonetic sounds generated by the users.

For recognising the user's emotional condition, it is analyse and process the sound packet of the phonetic sound for its amplitude, volume variation and intonation, while the volume variation and intonation reflect the user's emotion.

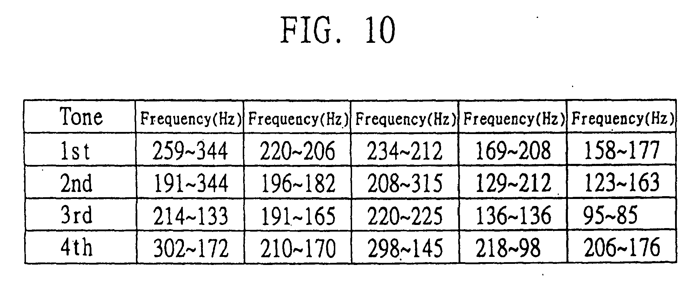

Fig. 10 illustrates statistic frequencies for four tones of Chinese characters. As shown in the drawing, a tone of a phonetic sound is the first tone if its frequency is between 259Hz and 344Hz. The tone is the second tone if its frequency is between 182Hz and 196Hz. The tone is the third tone if its frequency is between 220Hz and 225Hz. The tone is the forth tone if its frequency is between 176Hz and 206Hz.

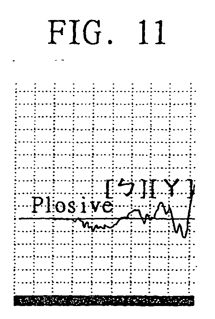

Fig. 11 illustrates a waveform of consonant and vowel for a Chinese character 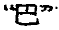 for phonetic recognition. As shown in the drawing, a consonant part is a plosive " 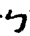 ", (pronounced as "b"), while a vowel is " 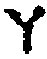 " (pronounced as "a") as the wave number is 6, slope is 5 and wave number> slope. So that the consonant and vowel are combined to get a phonetic sound " 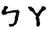 " (pronounced as "ba" for Chinese character " 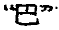 ". Further, intonation is inspected for Chinese phonetic tone, so as to distinguish " 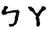 ", " 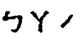 ", " 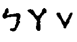 " and " 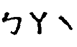 ", which represent the phonetic sound " 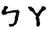 " having the first, second, third and fourth tone respectively.

In conclusion, the method and system for phonetic recognition described above allows phonetic recognition to be implemented by using principles of phonetic recognition and a general database of phonetic sounds and corresponding characters, so as to recognise a phonetic sound generated by a user and identify a character corresponding to the user's phonetic sound, without requiring a personal database of phonetic sounds and corresponding characters for the user to be establish in advance: Moreover, the method and system for phonetic recognition can also recognise a tone of the phonetic sound to be able to identify a Chinese character corresponding in variation of four tones to the phonetic sound. In addition, in the method and system for phonetic recognition, the phonetic sound can be analysed in timbre characteristic for allowing the user's timbre to be recognised, while variation in volume of the phonetic sound can be analysed so as to tell the user's emotional condition.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A method of phonetic recognition using principles of phonetic recognition and a general database of phonetic sounds and corresponding characters to conduct phonetic recognition, including the steps of:
(1) processing a phonetic sound generated by a user and transforming the phonetic sound into a phonetic waveform;
(2) dividing the phonetic waveform into parts of consonant, wind and vowel;
(3) recognising the parts of consonant and wind respectively according to waveform characteristics;
(4) determining characteristic parameters including turning number, wave number and slope of one of repeated waveforms that constitute the part of vowel, where the turning number is a count of turning points where the waveform changes the sign of slope, the wave number is a count of times for the waveform passing through the X-axis from a lower domain to an upper domain, and the slope is measured between sampling points of the waveform, and recognising the part of vowel according to rules involving the determined characteristic parameters;
(5) combining the recognised parts for determining a character corresponding to the phonetic sound; and
(6) completing the phonetic recognition.

2. A method as in claim 1, wherein the part of consonant has a waveform of gradation, affricate, extrusion or plosive, and the part of wind is much higher in frequency than the parts of consonant and vowel.

3. A method as in claim 1 or 2, wherein step (2) includes determining a fore frequency and a rear frequency of the phonetic waveform; step (3) includes recognising a tone for the phonetic sound according to a rule of comparing the fore and rear frequencies; and step (5) includes combining the recognised parts and the recognised tone for determining a corresponding character for the phonetic sound.

4. A method as in claim 3, wherein in step (2) the fore frequency is determined by taking an average frequency for a first quarter region of the phonetic waveform, and the rear frequency is determined by taking an average frequency for a final quarter region of the phonetic waveform.

5. A system for phonetic recognition including:
a phonetic recognition principle database (3) including principles of phonetic recognition to be used for processing a sound packet of a phonetic sound and dividing the sound packet into parts of consonant, wind and vowel, and determining characteristic parameters including turning number, wave number and slope of one of repeated waveforms that constitute the part of vowel, where the turning number is a count of turning points where the waveform changes the sign of slope, the wave number is a count of times for the waveform passing through the X-axis from a lower domain to an upper domain, and the slope is measured between sampling points of the waveform, so as to recognise the parts of consonant, wind and vowel with a set of rules respectively, and for combining the recognised parts of consonant and vowel to a corresponding character for the phonetic sound;
a database (5) of phonetic sounds and corresponding characters, wherein a phonetic sound consists of a consonant and a vowel, and has a corresponding character;
a phonetic transformation processing module (2) for transforming a user's phonetic sound into a corresponding physical waveform signal and inputting the waveform signal to a phonetic recognition processing module for phonetic recognition; and
a phonetic recognition processing module (4) for processing the waveform signal by dividing a sound packet thereof into parts of consonant, wind and vowel, and recognising the parts respectively according to the principles of phonetic recognition in the phonetic recognition principle database (3), so as to combine the recognised parts of consonant and vowel to be compared with the database of phonetic sounds and corresponding characters for obtaining a corresponding character for the phonetic sound.

6. A system as in claim 5, wherein the principles of phonetic recognition in the phonetic recognition principle database (3) include a rule for dividing the sound packet into the parts of consonant, wind and vowel; a rule for recognising the parts of consonant, wind and vowel; and a rule for combining the recognised parts of consonant and vowel.

7. A system as in claim 5, wherein:
the phonetic recognition principle database (3) further includes principles of phonetic recognition to be used for determining a fore frequency and a rear frequency for the sound packet, so as to recognise a tone for the phonetic sound according to rules of comparing the fore and rear frequencies, and for combining the recognised parts of consonant and vowel together with the recognised tone to a corresponding character for the phonetic sound; and
the phonetic recognition processing module (4) is further for determining the fore frequency and the rear frequency for the sound packet, so as to recognise the tone for the phonetic sound according to the rule of comparing the fore and rear frequencies, and for combining the recognised parts of consonant and vowel together with the recognised tone to be compared with the database (5) of phonetic sounds and corresponding characters for obtaining a corresponding character for the phonetic sound.

8. A system as in claim 7, wherein the principles of phonetic recognition in the phonetic recognition principle database (3) include a rule for dividing the sound packet into the parts of consonant, wind and vowel; a rule for determining the fore and rear frequencies; and a rule for recognising the parts of consonant, wind and vowel; a rule for recognising the tone for the phonetic sound; a rule for combining the recognised parts of consonant and vowel; a rule for combining the recognised parts of consonant and vowel and the recognised tone.

## Patentansprüche

1. Verfahren zur phonetischen Spracherkennung unter Verwendung von Prinzipien der phonetischen Erkennung und einer allgemeinen Datenbank von phonetischen Klängen und entsprechenden Zeichen oder Buchstaben, um eine phonetische Spracherkennung durchzuführen, mit den Schritten:
(1) Verarbeitung eines phonetischen Klanges, der von einem Benutzer erzeugt wird, und Umwandeln des phonetischen Klangs in eine phonetische Wellenform;
(2) Aufteilen der phonetischen Wellenform in Teile von Konsonant, Atem und Vokal;
(3) Erkennen der Teile von Konsonant bzw. Atem gemäß den Charakteristiken der Wellenform;
(4) Bestimmen charakteristischer Parameter einschließlich Wendeanzahl, Wellenzahl und Steigung einer der wiederholten Wellenformen, die den Teil eines Vokals bilden, wobei die Wendeanzahl eine Zählung der Wendepunkte ist, an denen die Wellenform das Vorzeichen der Steigung ändert, die Wellenzahl eine Zählung der Zeitpunkte ist, für die die Wellenform durch die x-Achse von einem unteren Bereich zu einem oberen Bereich gelangt, und die Steigung zwischen den Abtastpunkten der Wellenform gemessen wird, und Erkennen des Teils des Vokals gemäß Regeln, die die bestimmten charakteristischen Eigenschaften umfassen;
(5) Kombinieren der erkannten Teile zur Bestimmung eines Zeichens oder Buchstabens entsprechend dem phonetischen Klang; und
(6) Vervollständigen der phonetischen Erkennung.

2. Verfahren nach Anspruch 1, wobei der Teil eines Konsonanten eine Wellenform einer Staffelung, einer Affrikata, eines Extrusionslautes oder eines Verschlusslautes hat und der Teil des Atems in der Frequenz viel höher ist als die Teile von Konsonant und Vokal.

3. Verfahren nach Anspruch 1 oder 2, wobei Schritt (2) eine Bestimmung einer Vorderfrequenz und einer Hinterfrequenz der phonetischen Wellenform umfasst; Schritt (3) ein Erkennen eine Tons oder Tonfalls für den phonetischen Klang gemäß einer Regel zum Vergleich der Vorder- und Hinterfrequenz umfasst; und Schritt (5) ein Kombinieren der erkannten Teile und des erkannten Tons oder Tonfalls zur Bestimmung eines entsprechenden Zeichens oder Buchstabens für den phonetischen Klang umfasst.

4. Verfahren nach Anspruch 3, wobei in Schritt (2) die Vorderfrequenz durch Nehmen einer Durchschnittsfrequenz für einen ersten Viertelbereich der phonetischen Wellenform bestimmt wird und die Hinterfrequenz durch Nehmen einer Durchschnittsfrequenz für einen abschließenden Viertelbereich der phonetischen Wellenform bestimmt wird.

5. System zur phonetischen Spracherkennung mit:
einer Datenbank (3) phonetischer Spracherkennungsprinzipien mit Prinzipien der phonetischen Erkennung, die zur Verarbeitung eines Klangpaketes eines phonetischen Klangs und zum Aufteilen des Klangpaketes in Teile von Konsonant, Atem und Vokal und zur Bestimmung charakteristischer Parameter einschließlich Wendeanzahl, Wellenzahl und Steigung einer von wiederholten Wellenformen, die den Teil eines Vokals bilden, wobei die Wendeanzahl eine Zählung der Wendepunkte ist, an denen die Wellenform das Vorzeichen der Steigung ändert, die Wellenzahl eine Zählung der Zeitpunkte ist, für die die Wellenform durch die x-Achse von einem unteren Bereich zu einem oberen Bereich gelangt, und die Steigung zwischen den Abtastpunkten der Wellenform gemessen wird, um die Teile von Konsonant, Atem bzw. Vokal mit einem Satz an Regeln zu erkennen und zum Kombinieren der erkannten Teile von Konsonant und Vokal zu einem entsprechenden Zeichen oder Buchstaben für den phonetischen Klang verwendet werdem;
einer Datenbank (5) von phonetischen Klängen und entsprechenden Zeichen oder Buchstaben, wobei ein phonetischer Klang aus einem Konsonanten und einem Vokal besteht und ein entsprechendes Zeichen oder einen entsprechenden Buchstaben hat;
einem phonetischen Transformationsverarbeitungsmodul (2) zur Umwandlung eines phonetischen Klangs eines Benutzers in ein entsprechendes physikalisches Wellenformsignal und zum Eingeben des Wellenformsignals in ein phonetisches Erkennungsverarbeitungsmodul zur phonetischen Erkennung; und
einem phonetischen Erkennungsverarbeitungsmodul (4) zur Verarbeitung des Wellenformsignals durch Aufteilen eines Klangpaketes davon in Teile von Konsonant, Atem und Vokal und Erkennen der jeweiligen Teile gemäß den Prinzipien der phonetischen Erkennung in der Datenbank (3) für phonetische Erkennungsprinzipien, um die erkannten Teile von Konsonant und Vokal zu kombinieren, zum Vergleich mit der Datenbank von phonetischen Klängen und entsprechenden Zeichen oder Buchstaben zum Erhalt eines entsprechenden Zeichens oder Buchstabens für den phonetischen Klang.

6. System nach Anspruch 5, wobei die Prinzipien der phonetischen Erkennung in der Datenbank (3) für phonetische Erkennungsprinzipien eine Regel zum Aufteilen der Klangpakete in Teile von Konsonant, Atem und Vokal; eine Regel zum Erkennen der Teile von Konsonant, Atem und Vokal; und eine Regel zum Kombinieren der erkannten Teile von Konsonant und Vokal umfassen.

7. System nach Anspruch 5, wobei:
die Datenbank (3) für phonetische Erkennungsprinzipien femer Prinzipien der phonetischen Erkennung umfasst, die zur Bestimmung einer Vorderfrequenz und einer Hinterfrequenz für das Klangpaket, um einen Ton oder Tonfall für den phonetischen Klang gemäß Regeln eines Vergleichens der Vorderfrequenzen und der Hinterfrequenzen zu erkennen, und zum Kombinieren der erkannten Teile von Konsonant und Vokal zusammen mit dem erkannten Klang zu einem entsprechenden Zeichen oder Buchstaben für den phonetischen Klang verwendet werden; und
das phonetische Erkennungsverarbeitungsmodul (4) femer zur Bestimmung der Vorderfrequenzen und der Hinterfrequenzen für das Klangpaket, um den Ton oder Tonfall für den phonetischen Klang gemäß der Regel eines Vergleichens der Vorderfrequenzen und Hinterfrequenzen zu erkennen, und zum Kombinieren der erkannten Teile von Konsonant und Vokal zusammen mit dem erkannten Ton oder Tonfall zum Vergleichen mit der Datenbank (5) an phonetisehen Klängen und entsprechenden Zeichen oder Buchstaben zum Erhalt eines entsprechenden Zeichens oder Buchstabens für den phonetischen Klang bestimmt ist.

8. System nach Anspruch 7, wobei die Prinzipien der phonetischen Erkennung in der Datenbank (3) von phonetischen Erkennungsprinzipien eine Regel zum Aufteilen des Klangpaktes in die Teile von Konsonant, Atem und Vokal; eine Regel zum Bestimmen der Vorderfrequenzen und Hinterfrequenzen; und eine Regel zum Erkennen der Teile von Konsonant, Atem und Vokal; eine Regel zum Erkennen des Tons oder Tonfalls für den phonetischen Klang; eine Regel zum Kombinieren der erkannten Teile von Konsonant und Vokal; eine Regel zum Kombinieren der erkannten Teile von Konsonant und Vokal und den erkannten Ton oder Tonfall umfassen.

## Revendications

1. Procédé de reconnaissance phonétique utilisant les principes de la reconnaissance phonétique et une base de données générale de sons phonétiques et des caractères correspondants pour réaliser la reconnaissance phonétique, comprenant les étapes consistant à :
(1) traiter un son phonétique généré par un utilisateur et convertir le son phonétique en une onde phonétique;
(2) diviser l'onde phonétique en parties de consonne, respiration et voyelle ;
(3) reconnaître les parties de consonne et de respiration respectivement selon les caractéristiques de l'onde ;
(4) déterminer les paramètres caractéristiques, y compris le nombre d'inversions, le nombre d'onde et la pente de l'une des ondes répétées qui constituent la partie de voyelle, sachant que le nombre d'inversions est un décompte des points d'inversion où l'onde voit sa pente changer de signe, le nombre d'onde est un décompte des temps où l'onde coupe l'axe des X pour passer d'un domaine inférieur à un domaine supérieur, et la pente est mesurée entre les points d'échantillonnage de l'onde, et reconnaître la partie de voyelle selon les règles impliquant les paramètres caractéristiques déterminés ;
(5) combiner les parties reconnues afin de déterminer un caractère correspondant au son phonétique ; et
(6) réaliser la reconnaissance phonétique.

2. Procédé selon la revendication 1, dans lequel la partie de consonne a une forme d'onde de gradation, consonne affriquée, fricative ou plosive, et la partie de respiration présente une fréquence nettement plus élevée que les parties de consonne et de voyelle.

3. Procédé selon la revendication 1 ou 2, dans lequel l'étape (2) inclut la détermination d'une fréquence avant et d'une fréquence arrière de l'onde phonétique ; l'étape (3) inclut la reconnaissance d'une tonalité pour le son phonétique selon une règle de comparaison entre les fréquences avant et arrière ; et l'étape (5) inclut la combinaison des parties reconnues et de la tonalité reconnue pour déterminer un caractère correspondant du son phonétique.

4. Procédé selon la revendication 3, dans lequel, lors de l'étape (2), la fréquence avant est déterminée en calculant une fréquence moyenne pour une région de premier quart de l'onde phonétique, et la fréquence arrière est déterminée en calculant une fréquence moyenne pour une fréquence de quart final de l'onde phonétique.

5. Système de reconnaissance phonétique, incluant :
une base de données de principes de reconnaissance phonétique (3) incluant les principes de reconnaissance phonétique devant être utilisés pour traiter un paquet sonore d'un son phonétique et diviser le paquet sonore en parties de consonne, respiration et voyelle, et déterminer les paramètres caractéristiques incluant le nombre d'inversions, le nombre d'onde et la pente de l'une des ondes répétées qui constituent la partie de voyelle, sachant que le nombre d'inversions est un décompte des points d'inversion où l'onde voit sa pente changer de signe, le nombre d'onde est un décompte des moments où l'onde coupe l'axe des X pour passer d'un domaine inférieur à un domaine supérieur, et la pente est mesurée entre les points d'échantillonnage de l'onde, de manière à reconnaître les parties de consonne, respiration et voyelle avec un ensemble de règles respectivement, et pour combiner les parties reconnues de consonne et de voyelle en un caractère correspondant pour le son phonétique ;
une base de données (5) de sons phonétiques et de caractères correspondants, dans laquelle un son phonétique est constitué d'une consonne et d'une voyelle, et a un caractère correspondant,
un module de traitement de transformations phonétiques (2) permettant de transformer un son phonétique d'un utilisateur en signal d'onde physique correspondant et de délivrer le signal de l'onde à un module de traitement de reconnaissance phonétique pour la reconnaissance phonétique ; et
un module de traitement de reconnaissance phonétique (4) permettant de traiter le signal d'onde en divisant un paquet sonore de celui-ci en parties de consonne, respiration et voyelle, et en reconnaissant les parties respectivement selon les principes de la reconnaissance phonétique dans la base de données de principes de reconnaissance phonétique (3), de manière à combiner les parties reconnues de consonne et de voyelle devant être comparées à la base de données de sons phonétiques et les caractères correspondants afin d'obtenir un caractère correspondant pour le son phonétique.

6. Système selon la revendication 5, dans lequel les principes de reconnaissance phonétique dans la base de données de principes de reconnaissance phonétique (3) incluent une règle pour diviser le paquet sonore en parties de consonne, respiration et voyelle ; une règle permettant de reconnaître les parties de consonne, respiration et voyelle ; et une règle permettant de combiner les parties reconnues de consonne et de voyelle.

7. Système selon la revendication 5, dans lequel :
la base de données de principes de reconnaissance phonétique (3) inclut en outre les principes de reconnaissance phonétique devant être utilisés pour déterminer une fréquence avant et une fréquence arrière pour le paquet sonore, de manière à reconnaître une tonalité pour le son phonétique selon les règles de comparaison des fréquences avant et arrière, et permettant de combiner les parties reconnues de consonne et de voyelle conjointement avec la tonalité reconnue pour obtenir un caractère correspondant du son phonétique ; et
un module de traitement de reconnaissance phonétique (4) étant en outre prévu pour déterminer la fréquence avant et la fréquence arrière du paquet sonore, de manière à reconnaître la tonalité du son phonétique selon la règle de comparaison des fréquences avant et arrière, et combiner les parties reconnues de consonne et de voyelle conjointement à la tonalité reconnue devant être comparée à la base de données (5) de sons phonétiques et des caractères correspondants pour obtenir un caractère correspondant du son phonétique.

8. Système selon la revendication 7, dans lequel les principes de reconnaissance phonétique dans la base de données de principes de reconnaissance phonétique (3) incluent une règle permettant de diviser le paquet sonore en parties de consonne, respiration et voyelle ; une règle permettant de déterminer les fréquences avant et arrière ; et une règle permettant de reconnaître les parties de consonne, respiration et voyelle ; une règle permettant de reconnaître la tonalité du son phonétique ; une règle permettant de combiner les parties reconnues de consonne et de voyelle ; une règle permettant de combiner les parties reconnues de consonne et de voyelle et la tonalité reconnue.
